# EUROPEAN PATENT SPECIFICATION

(11) **EP 1 410 332 B1**
(45) Date of publication and mention of the grant of the patent: **13.12.2006**
(21) Application number: 02728280.5
(22) Date of filing: 26.04.2002
(51) Int. Cl.: G06T 7/20

(54) **METHOD FOR AUTOMATIC TRACKING OF A MOVING BODY**
VERFAHREN ZUM AUTOMATISCHEN VERFOLGEN EINES SICH BEWEGENDEN KÖRPERS
METHODE DE POURSUITE AUTOMATIQUE D'UN CORPS EN MOUVEMENT

(30) Priority: 27.04.2001 SE 0101486
(43) Date of publication of application: 21.04.2004
(73) Proprietor: Smart Eye AB, 411 21 Göteborg (SE)
(72) Inventor: NILSSON, Jesper, S-413 25 Göteborg (SE); SÖRNER, Per, S-413 07 Göteborg (SE)
(74) Representative: Edlund, Fabian
(86) International application number: PCT/SE2002/000821
(87) International publication number: WO 2002/089064

(56) References cited:
- US-A- 5 978 143
- US-B1- 6 181 805
- US-B1- 6 204 828
- MATSUMOTO Y. ET AL.: 'An algorithm for real-time stereo vision implementation of head pose and gaze direction measurement' PROCEEDINGS OF IEEE FOURTH INTERNATIONAL CONFERENCE ON FACE AND GESTURE. RECOGNITION (FG'00) 28 March 2000 - 30 March 2000, GRENOBLE, FRANCE, pages 499 - 504, XP010378305
- LOY G. ET AL.: 'Stereo 3D lip tracking' PROCEEDINGS OF SIXTH INTERNATIONAL CONFERENCE ON CONTROL., AUTOMATION, ROBOTICS AND COMPUTER VISION (ICARCV2000) December 2000, XP002954507
- GRAHAM-ROWE D.: 'Asleep at the wheel' NEW SCIENTIST MAGAZINE vol. 169, no. 2283, March 2001, XP002954508
- SHERRAH J. ET AL.: 'Estimation of human head pose using similarity measures', [Online] 08 June 2000, XP002954509 Retrieved from the Internet: <URL:http://www.dcs.qmul.ac.uk/~jamie/pose/ > [retrieved on 2001-10-24]
- STIEFELHAGEN R. ET AL.: 'Tracking eyes and monitoring eye gaze', [Online] XP002954510 Retrieved from the Internet: <URL:http://www.is.cs.cmu.edu/mie/eyegaze-h tml> [retrieved on 2001-10-24]

## Description

### Technical field

The present invention relates to a method for automatic tracking of a moving body, useful where a machine is adapted to keep track of the movements of a body. More specifically, the invention relates to tracking of a human face, making it possible to determine direction of gaze, useful in e.g. eye control of a computer.

### Technical background

Tracking of human motion is desirable in several applications, one of which is the control of a machine (e.g. a computer) with the eyes. In this case the tracking is actually double, as it is both the orientation of the head and the relative direction of gaze that needs to be tracked. The present invention is related primarily to the first type of tracking, namely tracking of the orientation of the head (head pose) or any other comparable body part (an arm, a hand etc).

There are different approaches to successful tracking of the motion of a human body using a digital video camera. The basic principle relevant in the context of the present invention is to select a number of areas on the body (referred to as templates) and to identify these areas in each digital frame of the video stream. In a simple solution with one camera, the areas are identified in the 2D-picture, resulting in problems when the body turns or moves in the plane normal to the camera.

This problem can be overcome by performing the identification in 3D. By using two cameras, carefully calibrated with each other, an image of the body can be obtained in 3D, and the identification of selected areas can be performed thereon. However, the calibration and computation required to obtain a complete 3D-picture of a body are expensive and time consuming, and makes any real time process, aimed at the consumer market, difficult. Even if the development of computer hardware makes such 3D treatment possible in real time, it will still be a waste of computation time and energy, as a dominating part of the 3D information never will be used by the tracking procedure.

An alternative is presented in "An algorithm for real time stereo vision implementation of head pose and gaze direction measurement", by Yoshio Matsumoto and Alexander Zelinsky, Proceedings of the fourth international conference on automated face and gesture recognition, 28-30 march, 2000, page 499-504. According to this method, a 3D model of the face is designed, and a number of areas (3D features) are selected and related to the model. The locations of the features are identified in the 2D pictures from each camera, and these locations are then processed to obtain 3D information on the orientation and location of the face. Thus, the identification of templates in each picture frame is performed in 2D, just as in a conventional 2D system. This identification is performed in at least two frames for each time slot, where the frames are acquired from slightly different angles, leading to a 3D position of the feature.

However, as the templates to be identified are identical for both cameras, this method is sensitive to variations in the different images, acquired from different angles. Therefore, it is important that the cameras are not spaced too far apart, and of course that they generate the same type of images.

With cameras arranged close to each other, several problems arise. Firstly, the number of possible tracking points is reduced. Point on the side of the head, such as the ears, otherwise suitable for tracking, may not be used if two cameras arranged right in front of the face are used. Secondly, in a situation where a part of the face is obscured, for example by another body part or by any other object, there is an increased risk that both cameras will be blocked simultaneously, leading to great difficulties in the tracking procedure.

### Summary of the invention

The object of the present invention is to overcome this problem, and provide a method for tracking the motion of a body that is inexpensive yet sufficiently robust.

This and other objects are achieved by defining several sets of templates, each set comprising a plurality of templates consisting of areas selected from a 2D image of the body; relating each template set to a body coordinate system, acquiring at least two images representing different views of the body at one given moment in time; for each image associating the image with at least one of said template sets, locating each template in this template set in the image, and calculating a preliminary position of said body coordinate system in space; and using a geometrical relationship between said views to combine said preliminary positions, thereby reducing uncertainties in the position of the body coordinate system in space.

According to the invention, different sets of templates are defined, in which sets the templates are portions of 2D images acquired from a specific angle or view of the object. For instance, a right view set and a left view set can be defined, where the templates in the right view set are 2D images of certain features of the body viewed slightly from the right, and the left set similarly viewed from the left.

A major difference to conventional technology is that 2D coordinates of templates representing the same feature are not compared with each other. Instead, the locations of the templates in a set in a specific image are used to determine the relation between the body coordinate system and this template set, thereby determining the orientation of the body coordinate system BCS in space (i.e. determining the orientation of the body) .

However, as the templates are only identified in 2D, the determination of the BCS can not be satisfactorily determined with only one image. Instead, at least two images, acquired from different views and related to different template sets, are required. A geometrical relationship between each of these views, preferably based on their relationship with a fixed world coordinate system, is used to combine at least two "preliminary" BCS orientations and to generate a "final" BCS orientation.

The inventive method secures an improved redundancy compared to conventional technology.

As the set of templates to be identified in each picture frame can be chosen depending on the view of the body that the picture frame has been acquired from, identification of templates in a picture frame is also made considerably more stable.

If it can be determined that the acquired image corresponds sufficiently well with one template set, corresponding to the same view as the image, it is associated with this template set.

If, on the other hand, it can not be determined that the image corresponds sufficiently well with one template set, each image can be associated with two template sets corresponding to views adjacent to said image, and these template sets are combined to generate a new template set, better corresponding to the image.

The method can be performed with at least two image sensors, each acquiring a series of images of the body. While it is conceivable to use only one image sensor that is moved between different locations, the solution with several sensors is more stable.

The image sensors can be synchronized in some way, to ensure that images from different sensors are acquired at the same moment in time. This is important, in order for the different "preliminary" BCS orientations that will be generated should be compatible.

However, unsynchronized image sensors may be used, as long as images from these sensors are processed, e.g. interpolated, to generate images from one given moment in time.

With three sensors, an even more accurate tracking method can be accomplished. Preferably, in this case, the cameras are arranged in a triangular formation, making it easier to determine rotational movement in different planes.

Another possible aspect is to align several cameras in one plane in front of the body, thereby covering a greater angular interval from e.g. left to right. This arrangement facilitates the tracking of a turning body, as a particular set of templates may be identified in an image acquired by at least one of the cameras.

The step of locating each template can comprise a first step, for locating a region in the picture frame that comprises the body, and a second step, for locating the templates in this region. As the two steps require different accuracy, different algorithms can be used, such that in the first step a very quick search of the entire picture is performed, while in the second step, a more detailed, accurate search of the located area is performed.

In a preferred embodiment, the body is the head of a user, and the templates are then normally selected as parts of the users face, such that the corners of the eyes, the corners of the mouth and the nostrils.

### Brief description of the drawings

These and other aspects of the invention will be apparent from the preferred embodiments more clearly described with reference to the appended drawings.

Fig 1 is a schematic view of an arrangement according to an embodiment of the invention.

Fig 2 is a flow chart of the process followed with the arrangement in fig 1.

Fig 3 shows five template sets, comprising five views of a face with features marked.

Fig 4 shows a body coordinate system fixed in the en face image of fig 3.

Fig 5 shows how two template sets are related to each other.

### Detailed description of a preferred embodiment

The body should preferably have a topology with strong contrasts, making it possible to find points suitable for tracking. Further, the body should have a limited number of degrees of freedom, in order to facilitate tracking of the body. For example, the head of a user is a suitable object to track, while the hand of a user has too many degrees of freedom to be tracked effectively.

In the preferred embodiment, the method according to the invention is used to determine the direction of gaze of a user. This detection may be used implemented in a system for controlling a computer system with the eyes, a system for surveying a driver of a vehicle or any other type of system.

In the following description, Roger Tsai's perspective projection camera model will be assumed, with reference made to "An Efficient and Accurate Camera Calibration Technique for 3D Machine Vision", Roger Y. Tsai, Proceedings of IEEE Conference on Computer Vision and Pattern Recognition, Miami Beach, FL, 1986, pages 364-374.

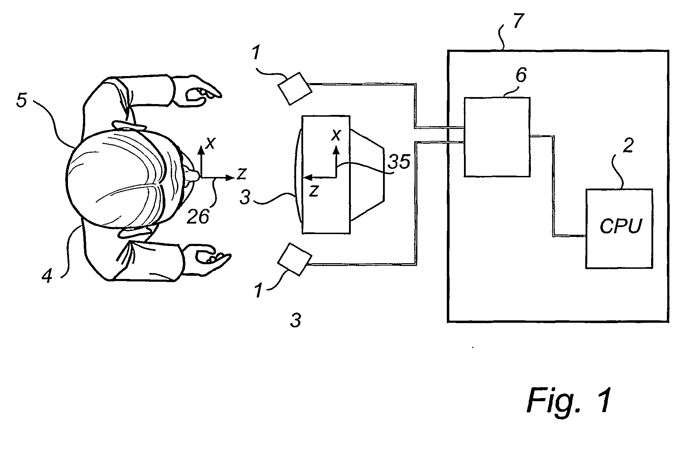

The system illustrated in fig 1 includes two image sensors 1, connected to a processing unit 2 such as a microprocessor. The images sensors 1 can be electronic (analog or digital), but optical image sensors, being developed today, may equally well be used. In the example described herein, an electronic image sensor is used, for example a CCD or CMOS based camera. The CCD/CMOS sensor generates a pixel based image where each pixel has a continuous (analog) intensity. An analog/digital conversion is then performed, either in the camera itself resulting in a digital output from the camera (a so called digital camera), or outside the camera, for example in a framegrabber 6 card in a personal computer 7.

The cameras are located adjacent to a computer screen 3, in front of which a user 4 is seated. The cameras 1 are arranged to monitor the head 5 of the user, and the digital information from the cameras 1 is supplied to the processing unit 2, which, based on this information, determines the gaze direction of the user's eyes. This information is then supplied to the computer system the user is using, and treated similarly as the signal from a computer mouse to i.e. control the movement of a cursor.

The two cameras 1 are each adapted to acquire a series of picture frames of the user's head 5, all according to conventional digital video technology. The processing unit 2 is thus fed with two series of digital picture frames (normally bit map pictures), acquired from different angles of the head.

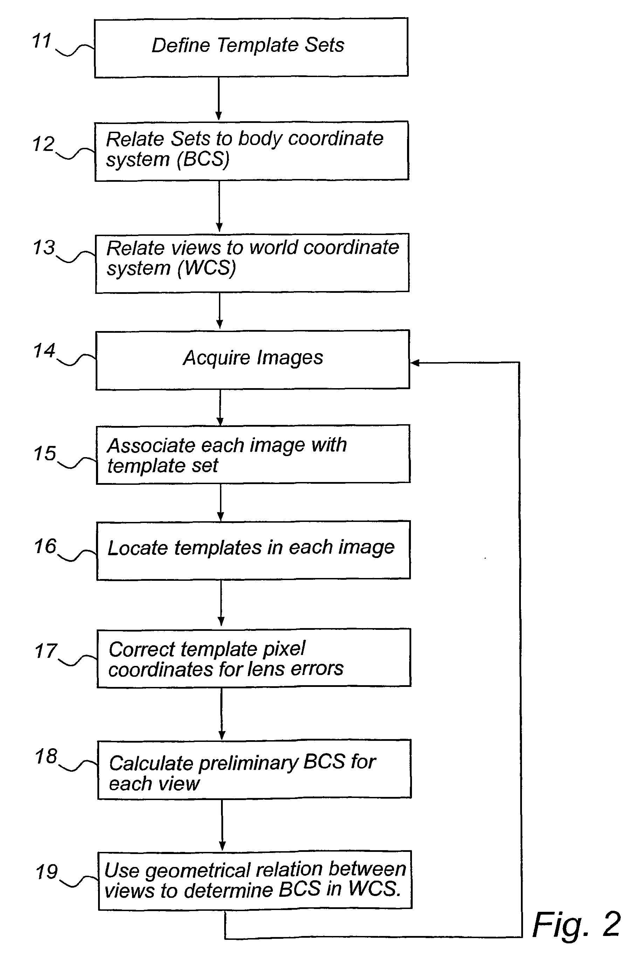

Referring now to fig 2, the tracking process starts with a pre-tracking stage (steps 11 - 19).

First, in step 11, several template sets are defined, each set based on one 2D image of the body. Each template is an area of interest in the image, having properties making it easy to identify and locate in an image, such as contrast rich contents.

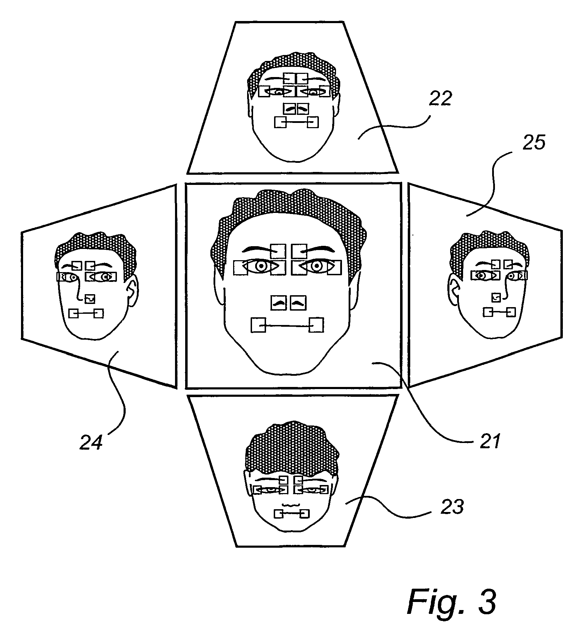

In the preferred embodiment, 2D images of the face are acquired from different angles, for example as illustrated in fig 3. Note that these images 21-25 may well be acquired with the same camera, while the head is turned in different directions. In each image salient features are marked, and image 21, the en face view, clearly shows that in the present case ten features are marked. Image 22 has the advantage of showing the nostrils clearly, providing two effective tracking positions. In image 23, on the other hand, the nostrils are hidden. Note also that in the left image 24 only the left ear is visible, while the right inner eye corner is hidden by the nose. In the left image 25 the situation is mirrored.

The selection and marking of facial features can be done manually, by using e.g. the mouse to mark relevant areas on an image displayed on the screen, but also more or less automatically with an algorithm adapted for this purpose (not further described herein). Each image with the corresponding salient features constitutes a template set.

The 2D correspondence between the templates is directly given from the 2D image; at least if the lens error for the image-capturing device is known. An even better relationship can be obtained if information about height difference between templates in a set is known. Below it will be described how such information can be automatically calculated during the tracking process.

Each template set should have some unique aspect to be useful, with the most obvious aspect of course being that they are based upon images representing different views of the body. Note that differences in position within the image plane are irrelevant, as they only correspond to a translatory movement of the image a certain number of pixels.

However, template sets can differ also, in other aspects:
Different type of image capturing device (i.e infrared/Color/black and white)
Different type of lens (narrow/wide)
Different lightning conditions (full day-light/darkness/only infra-red etc)
In step 12, each template set is related to a fixed body coordinate system (BCS). The BCS location and orientation is not critical, but must be the same for all template sets.

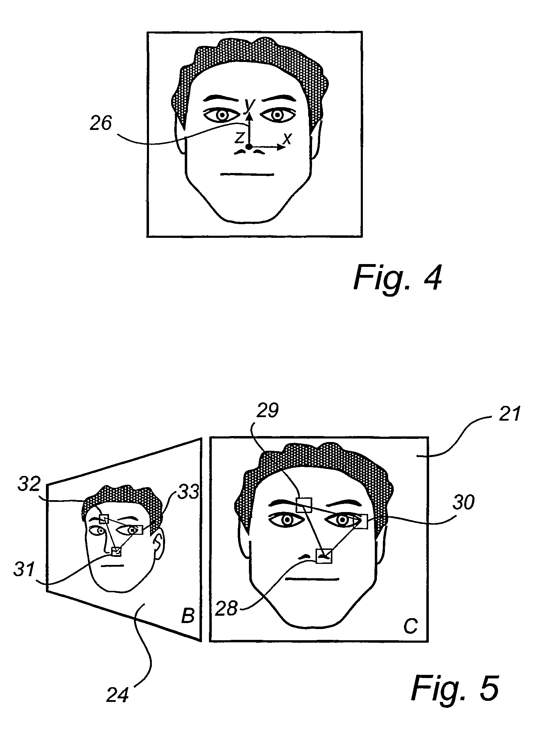

Fig 4 illustrates how an arbitrary coordinate system in the en face view 21 is chosen as the Body Coordinate System 26. In this case the BCS has its origin between the nostrils, and is X-Y plane is parallel to the pixel plane. To relate the other template sets to the front image 21, at least three different (and not co-linear) points have to be identified in each image. For instance, as illustrated in fig 5, to relate the en face image 21 with the left image 24, templates 28, 29 and 30 in image 21 are correlated to the surrounding of templates 31, 32, and 33 in image 24 and vice verse. This gives enough information to calculate the BCS 26 for all template sets.

In step 13, each image-capturing device is related to a World Coordinate System (WCS) 35, in other words their relative position (distance from each other, relative rotation, etc) is determined. The choice of WCS is not crucial per se.

Returning to fig 1, the WCS 35 is chosen to have its origin between the two cameras 1. As this coordinate system is not fixed to any of the cameras "natural" coordinate systems (such as the image plane or parallel to the image plane of one of the cameras), three points are needed to relate the three coordinate systems to each other. For each point the position in both the cameras' 1 coordinate systems and in the WCS 35 must be determined. This can be accomplished with for instance a chess-board which is held at two different distances parallel to the WCS XY-plane. The crossing points of black and white squares can easily be identified in each camera.

The next steps 14-19 form the actual tracking loop, being constantly iterated during tracking.

In step 14, a plurality of images are acquired, all representing the body appearance in same moment in time, different from each other in some aspect, including being acquired from different angels (different views).

Images from the same moment in time can be obtained if the cameras 1 are synchronized, but if this is not the case series of unsynchronized images may be interpolated to achieve the desired images. Also, in some cases not all cameras are capable of delivering an image, a camera might for example be obstructed by a hand etc. This reduces the amount of available information in the particular tracking frame, but does not affect the inventive method to any large extent.

Next, in step 15, each image is associated with a template set. Several factors may influence which set is associated with a particular image, the most important being:
the position of the body from the last iteration
the velocity of the body from the last iterations the lightning conditions
which image-capturing device that was used to acquire the image.

If a particular image sensor was used to acquire the 2D image that a template set is based on, and the body is still in essentially the same position, then images acquired with this sensor will be associated with that template set. However, if the body moves significantly, another template set, acquired from a different view, might be better adapted for the acquired image.

In some cases, no defined template set will correspond to the view that the current image was acquired from. It may then be advantageous to use two template sets, corresponding to adjacent views, and interpolate a new template set corresponding to the current image view.

In the tracking step 16, normal tracking techniques are used to locate the templates of the selected set in each image. This leads to a positioning of the template set in the image plane, and thus a geometrical relationship between the image and the template set.

In step 17, template pixel coordinates are corrected for lens errors. This can be done according to techniques known per se, e.g. vector based transforms applied on each coordinate (x, y). However, the process is made very fast as, according to the inventive method, only a few coordinates (the identified template locations) are relevant, compared to cases where lens correction methods applied to each pixel in a bit map image.

As mentioned above, the WCS 35 is in step 13 related to the camera position, and thus to the acquired image. The tracking in step 16 results in a relationship between the image and the template set, which in step 12 was related to the BCS 26. Therefore, the locations of the templates in a set can be used in step 18 to calculate a preliminary position of the BCS in relation to the WCS. Note however, that this location is very uncertain in directions lying outside the image plane of the particular image. For example, a camera placed in front of user 4 can only accurately locate the BCS 35 in the plane of the face. Movements towards or away from the camera 1 can not be accurately determined. This is one of the problems with conventional 2D tracking.

In the last step in the iteration sequence, step 19, all preliminary BCS positions from the different images (representing different views) are combined in order to generate an accurate position of the BCS 26 in the WCS 35, reducing uncertainties in the preliminary BCS positions.

This combination process can include a least square minimization, but it should be noted that each BCS position is biased with regards to the view it represents. More specifically, each preliminary BCS position is fairly accurate in the x,y-direction, i.e. distances in the image plane, and more uncertain in the z-direction, i.e. distances between the camera and the object. This information may be used in the combination process, by weighting the accurately determined position information. An example of accomplishing this is to convert each preliminary BCS position into a "cloud" of positions, with little variation in the x,y-coordinates, and a larger spread in the z-coordinate. The position X, Y, Z can then be converted into a collection of positions comprising (X, Y, Z), (X+1, Y+1, Z+10), (X+1, Y+1, Z-10), (X+1, Y-1, Z+10), (X+1, Y-1, Z-10), (X-1, Y+1, Z+10), (X-1, Y+1, Z-10), (X-1, Y-1, Z+10), (X-1, Y-1, Z-10). By combining the preliminary BCS position "clouds", the accuracy information is used to bias the resulting BCS.

The tracking process then returns to step 14, and steps 15-19 are repeated with new images.

In the described implementation, where the head tracking is used for detection of gaze direction, the BCS position is equivalent to the head pose, which is used in combination with an exact location of the iris to determine the gaze direction.

## Claims

1. Method for automatic tracking of a body (5) comprising the steps of
defining (11) several different sets of templates, each set comprising a plurality of templates consisting of areas selected from a 2D image of the body acquired from a specific angle or view;
relating (12) each template set to a body coordinate system (26);
acquiring (14) at least two images (21-25) each representing a different view of the body at one given moment in time from a position having a known relationship to a world coordinate system (35);
for each image, repeating the steps of associating 15) the image with at least one of said template sets, locating (16) each template in said at least one template set in the image, and calculating a preliminary position of said body coordinate system (26) in said world coordinate system (35); and
using said preliminary positions and a geometrical relationship between said views for reducing uncertainties in the position of the body coordinate system (26) in the world coordinate system (35).

2. Method according to claim 1, wherein each image (21-25) is associated with one template set corresponding to the same view as said image (21-25).

3. Method according to claim 1, wherein each image is associated with two template sets corresponding to views adjacent to said image (21-25) and said template sets are combined to generate a new template set, better corresponding to the image.

4. Method according to claim 1-3, wherein said images (21-25) are acquired with at least two image sensors (1), each acquiring a series of images of the body (5).

5. Method according to claim 4, wherein said image sensors (1) are synchronized.

6. Method according to claim 4, wherein said image sensors (1) are unsynchronized, and said series of images are interpolated to generate said images from one given moment in time.

7. Method according to any of the preceding claims, wherein the step (16) of locating each template comprises a first step, for locating a region in the picture frame that comprises the body, and a second step, for locating said templates in said region.

8. Method according to any of the preceding claims, wherein the body (5) is the head of a user (4) and the method is used for determining the head pose.

9. Method according to claim 8, wherein the templates are selected from an image of the face, including the corners of the eyes (30), the corners of the mouth and the nostrils (28).

## Patentansprüche

1. Verfahren zum automatischen Verfolgen eines Körpers (5) mit den Schritten
Definieren (11) mehrerer verschiedener Sätze von Mustern, wobei jeder Satz eine Vielzahl von Mustern umfasst, die aus von einem 2D-Bild des Körpers ausgewählten Bereichen bestehen und aus einem bestimmten Winkel oder aus einer bestimmten Ansicht gewonnen wurden;
jeden Mustersatz zu einem Koordinatensystem (26) des Körpers in Bezug SETZEN (12);
Erstellen von wenigstens zwei Bildern (21-25), von denen jedes eine unterschiedliche Ansicht des Körpers zu einem bestimmten Zeitpunkt aus einer Position darstellt, die in einer bekannten Beziehung zu einem Welt-Koordinatensystem (35) steht;
für jedes Bild: Wiederholen der Schritte des Zuordnens (15) des Bildes zu wenigstens einem der Mustersätze, Auffinden (16) jedes Musters in dem wenigstens einen Mustersatz in dem Bild, und Berechnen einer vorläufigen Position des Koordinatensystems (26) des Körpers im Welt-Koordinatensystem (35); und
Verwenden der vorläufigen Positionen und einer geometrischen Relation zwischen den Ansichten zur Reduktion von Unsicherheiten in der Position des Koordinatensystems (26) des Körpers im Welt-Koordinatensystem (35).

2. Verfahren nach Anspruch 1, **dadurch gekennzeichnet, dass** jedes Bild (21-25) mit einem Mustersatz in Beziehung gesetzt wird, der derselben Ansicht wie das Bild (21-25) entspricht.

3. Verfahren nach Anspruch 1, **dadurch gekennzeichnet, dass** jedes Bild mit zwei Mustersätzen in Beziehung gesetzt wird, die Ansichten neben dem Bild (21-25) entsprechen, und dass die Mustersätze kombiniert werden, um einen neuen, dem Bild besser entsprechenden Mustersatz zu ergeben.

4. Verfahren nach Anspruch 1 bis 3, **dadurch gekennzeichnet, dass** die Bilder (21-25) mit Hilfe von wenigstens zwei Bildsensoren (1) gewonnen werden, von denen jeder eine Serie von Bildern des Körpers (5) gewinnt.

5. Verfahren nach Anspruch 4, **dadurch gekennzeichnet, dass** die Bildsensoren (1) synchronisiert sind.

6. Verfahren nach Anspruch 4, **dadurch gekennzeichnet, dass** die Bildsensoren (1) nicht synchronisiert sind und die Serien von Bildern interpoliert werden, um die Bilder von einem bestimmten Zeitpunkt zu ergeben.

7. Verfahren nach einem der vorhergehenden Ansprüche, **dadurch gekennzeichnet, dass** der Schritt (16) des Auffindens des Musters einen ersten Schritt zum Auffinden eines Bereiches in dem den Körper umfassenden Bildrahmen und einen zweiten Schritt zum Auffinden des Musters in diesem Bereich umfasst.

8. Verfahren nach einem der vorhergehenden Ansprüche, **dadurch gekennzeichnet, dass** der Körper (5) der Kopf eines Benutzers (4) ist und das Verfahren zur Feststellung der Kopfhaltung verwendet wird.

9. Verfahren nach Anspruch 8, **dadurch gekennzeichnet, dass** die Muster aus einem Bild des Gesichts, einschliesslich der Augenwinkel (30), der Mundwinkel und der Nasenlöcher (28) gewählt werden.

## Revendications

1. Procédé de suivi automatique d'un corps (5), comprenant les étapes consistant à
définir (11) plusieurs ensembles différents de modèles, chaque ensemble comprenant une pluralité de modèles constitués de zones sélectionnées à partir d'une image 2D du corps acquise selon un angle de vue spécifique ;
mettre en relation (12) chaque ensemble de modèles avec un système (26) de coordonnées du corps ;
acquérir (14) au moins deux images (21-25) représentant chacune une vue différente du corps à un instant du temps donné à partir d'une position ayant une relation connue avec un système mondial (35) de coordonnées ;
pour chaque image, répéter les étapes consistant à associer (15) l'image avec au moins l'un desdits ensembles de modèles, localiser (16) chaque modèle dans ledit au moins un ensemble de modèles dans l'image, et calculer une position préliminaire dudit système (26) de coordonnées du corps dans ledit système mondial (35) de coordonnées ; et
utiliser lesdites positions préliminaires et une relation géométrique entre lesdites vues pour réduire les incertitudes dans la position du système (26) de coordonnées du corps dans le système mondial (35) de coordonnées.

2. Procédé selon la revendication 1, dans lequel chaque image (21-25) est associée à un ensemble de modèles correspondant à la même vue que ladite image (21-25).

3. Procédé selon la revendication 1, dans lequel chaque image (21-25) est associée à deux ensembles de modèles correspondant à des vues adjacentes à ladite image (21-25) et lesdits ensembles de modèles sont combinés pour générer un nouvel ensemble de modèles, correspondant mieux à l'image.

4. Procédé selon les revendications 1 à 3, dans lequel lesdites images (21-25) sont acquises à l'aide d'au moins deux capteurs (1) d'image, chacun acquérant une série d'images du corps (5).

5. Procédé selon la revendication 4, dans lequel lesdits capteurs (1) d'image sont synchronisés.

6. Procédé selon la revendication 4, dans lequel lesdits capteurs (1) d'image sont non synchronisés, et lesdites séries d'images sont interpolées afin de générer lesdites images à partir d'un instant du temps donné.

7. Procédé selon l'une quelconque des revendications précédentes, dans lequel l'étape (16) consistant à localiser chaque modèle comprend une première étape destinée à localiser dans la trame d'image une région qui comprend le corps, et une deuxième étape destinée à localiser lesdits modèles dans ladite région.

8. Procédé selon l'une quelconque des revendications précédentes, dans lequel le corps (5) est la tête d'un utilisateur (4) et le procédé est utilisé pour déterminer la posture de la tête.

9. Procédé selon la revendication 8, dans lequel les modèles sont sélectionnés à partir d'une image du visage, y compris les coins des yeux (30), les coins de la bouche et les narines (28).
